# EUROPÄISCHE PATENTSCHRIFT

(11) **EP 3 983 656 B1**
(45) Veröffentlichungstag und Bekanntmachung des Hinweises auf die Patenterteilung: **08.11.2023**
(21) Anmeldenummer: 20733214.9
(22) Anmeldetag: 08.06.2020
(51) Int. Cl.: F01K 23/10

(54) **DRUCKBEAUFSCHLAGUNG VON ABGASEN EINES TURBINENKRAFTWERKS**
PRESSURISATION OF EXHAUST GASES FROM A TURBINE POWER PLANT
PRESSURISATION DES GAZ D'ÉCHAPPEMENT D'UNE CENTRALE À TURBINE

(30) Priorität: 13.06.2019 DE 102019116065
(43) Veröffentlichungstag der Anmeldung: 20.04.2022
(73) Patentinhaber: Voith Patent GmbH, 89522 Heidenheim (DE)
(72) Erfinder: BRAUN, Josef, 74564 Crailsheim (DE); SCHIRLE, Hans, 74597 Stimpfach (DE)
(74) Vertreter: Voith Patent GmbH - Patentabteilung
(86) Internationale Anmeldenummer: PCT/EP2020/065757
(87) Internationale Veröffentlichungsnummer: WO 2020/249494

(56) Entgegenhaltungen:
- EP-A1- 2 395 205
- DE-A1-102016 206 750
- US-A1- 2014 056 687

## Beschreibung

Die Erfindung betrifft eine Druckbeaufschlagungsvorrichtung für Abgase eines Turbinenkraftwerks, ein Turbinenkraftwerk mit einer solchen Druckbeaufschlagungsvorrichtung sowie ein Verfahren zum Druckbeaufschlagen von Abgasen eines Turbinenkraftwerks.

Mittels Anlagen zur Abscheidung und/oder zur Speicherung von Kohlenstoffdioxid (englisch: Carbon Capture und Storage, CCS) kann der Ausstoß von Treibhausgasen in die Atmosphäre bei Kraftwerken, die mit der Verbrennung von fossilen Brennstoffen betrieben werden, reduziert oder gar vermieden werden. Dies gilt sowohl für Gasturbinenkraftwerke, bei denen die Turbinenschaufeln direkt mit den Verbrennungsgasen beaufschlagt werden, als auch für Dampfturbinenkraftwerke, bei welchen ein Dampfkreislauf mit Wärmeenergie aus der Verbrennung des Brennstoffs betrieben und die Turbinenschaufeln mit dem erhitzten Dampf beaufschlagt werden.

Neben CCS- Prozessen, bei welchen das Kohlenstoffdioxid vor der Verbrennung des Brennstoffs abgeschieden wird (Pre-Combustion) ist eine gängige Methode die Abscheidung des Kohlenstoffdioxids nach der Verbrennung (Post-Combustion) aus den Abgasen der Verbrennung. Dabei kann entweder zuerst das Abgas komprimiert und anschließend das Kohlenstoffdioxid abgeschieden werden, oder das Kohlenstoffdioxid wird zuerst abgeschieden und anschließend komprimiert. In beiden Fällen benötigt der CCS-Prozess einen sehr leistungsstarken Verdichter.

Bei bekannten Kraftwerken mit einer Einrichtung zur Post-Combustion-CCS wird der benötigte Verdichter mit einer elektrischen Maschine betrieben, die entsprechend der benötigten Verdichterleistung mit elektrischer Leistung versorgt werden muss. Dazu kann beispielsweise ein Teil der mit dem Kraftwerk nutzbar gemachten elektrischen Energie dem Verdichterantrieb zugeleitet werden. Eine solche Anordnung erlaubt eine flexible Regelung der Verdichterleistung entsprechend der in der Anlage vorliegenden Entwicklung des Verdichtungsbedarfs. Nachteilig ist allerdings der schlechte Wirkungsgrad der Leistungsübertragung von der Turbine zu dem Verdichter aufgrund der Verluste bei den Transformationen von Drehmoment an der Turbinenabtriebswelle in elektrische Energie und wieder in Drehmoment an dem Verdichter.

Bei Gasturbinenkraftwerken mit Pre-Combustion-CCS ist bekannt, dass sich der Verdichter für die Verbrennungsluft und der Gasturbinenexpander eine Triebwelle teilen.

Eine gemeinsame Triebwelle ist aus der WO 2012/003076 A1 auch für die Komprimierung von gekühltem Recyclinggas mittels eines ersten Kompressors bekannt, wenngleich nach dem Kenntnisstand der Anmelderin eine solche Konfiguration in gegenwärtigen Kraftwerken aufgrund der damit verbundenen Nachteile keine Anwendung findet. Mit der gemeinsamen Triebwelle kann nämlich die Verdichterleistung nicht unabhängig von der Turbinenleistung angepasst werden.

Aus dem Stand der Technik ist weiterhin die EP 2 395 205 A1 bekannt, bei der ein Kompressor zur CO₂ Verdichtung mittels einer zweiten, eigenen Dampfturbine betrieben wird.

Aus dem Stand der Technik ist weiterhin die US 2014/056687 A1 bekannt, die einen CO₂ Kompressor aus der Abwärme eines Verbrennungsmotors betreibt, und zudem einen Generator zur Stromgewinnung zuschalten kann.

Aus der Druckschrift US 2014/0216034 A1 ist ferner ein Antriebsstrang bekannt, um ein Kraftwerk nicht mit Wasserdampf sondern CO₂ zu betreiben. In diesem wird der Verdichter, der das CO₂ dem Prozess zuführt, von einer Turbine oder dem Elektromotor angetrieben, wobei für den Umschaltvorgang zwischen beiden Betriebsweisen jeweils eine Kupplung zwischen dem Verdichter und der Turbine einerseits und dem Verdichter und Elektromotor andererseits vorgesehen ist.

Vor diesem Hintergrund ist es eine Aufgabe der Erfindung, eine Druckbeaufschlagung für Abgase eines Turbinenkraftwerks zu verbessern und ferner deren Betätigung zu optimieren.

Diese Aufgabe wird gelöst durch eine Druckbeaufschlagungsvorrichtung mit den Merkmalen von Anspruch 1, durch ein Turbinenkraftwerk mit den Merkmalen von Anspruch 9 sowie durch ein Verfahren mit den Merkmalen von Anspruch 12. Die abhängigen Ansprüche betreffen vorteilhafte Weiterbildungen der Erfindung.

Gemäß einem ersten Aspekt der Erfindung wird eine Druckbeaufschlagungsvorrichtung für Abgase eines Turbinenkraftwerks bereitgestellt. Bei den Abgasen, die mit Druck beaufschlagt werden, handelt es sich insbesondere um Kohlenstoffdioxid-haltige Abgase und/oder um eine Kohlenstoffdioxid-reiche Teilmenge der Abgase (beispielsweise, nachdem mit einem geeigneten Abscheidungsprozess andere Bestandteile der Abgase, beispielsweise Stickstoff und/oder andere) abgetrennt wurden.

Eine Turbine, insbesondere eine Hauptturbine, des Kraftwerks ist insbesondere unmittelbar oder mittelbar mit einem Fluid antreibbar, welches zum Betrieb der Turbine, insbesondere mittels eines Verbrennungsvorgangs, erhitzt und/oder unter Druck gesetzt wird.

Die Druckbeaufschlagungsvorrichtung weist zumindest eine Fluidarbeitsmaschine auf, insbesondere einen Verdichter und/oder eine Pumpe, wobei der Verdichter zusätzlich auch als Pumpe oder die Pumpe zusätzlich auch als Verdichter ausgebildet sein kann. Je nachdem, ob die Fluidarbeitsmaschine als Verdichter und/oder als Pumpe ausgebildet ist, ist sie zur Verdichtung gasförmiger Anteile der Abgase und/oder zur Druckbeaufschlagung flüssiger Anteile der Abgase eingerichtet, die insbesondere aus dem Verbrennungsvorgang des Brennstoffs zum mittelbaren oder unmittelbaren Antrieb der Turbine entstehen.

Die Fluidarbeitsmaschine ist, insbesondere unmittelbar und/oder mittelbar, mit einer Abtriebswelle einer Hauptturbine des Kraftwerks zur Drehmomentübertragung verbindbar, insbesondere verbunden, und mittels eines von der Abtriebswelle übertragenen Drehmoments antreibbar, insbesondere angetrieben.

Erfindungsgemäß ist vorgesehen, dass die Druckbeaufschlagungsvorrichtung ein mit der Antriebswelle der Fluidarbeitsmaschine verbundenes und zumindest ein hydrodynamischen Getriebeelement aufweisendes Leistungsübertragungselement umfasst, das mit der Abtriebswelle der Hauptturbine verbindbar ist. Der Einsatz eines hydrodynamischen Getriebeelementes in der Verbindung zwischen Abtriebswelle der Hauptarbeitsturbine und der Fluidarbeitsmaschine bietet den Vorteil eines sanften und langsamen Anfahrens der Fluidarbeitsmaschine sowie einer schwingungsdämpfenden und verschleißfreien Kraftübertragung. Das hydrodynamische Getriebeelement ermöglicht desweiteren das Anfahren eines sehr großen Massenträgheitsmomentes. Im Vergleich zu einer mechanischen Trennkupplung ist eine Einkoppelung und Entkoppelung der Fluidarbeitsmaschine unter Last bei weiterlaufender Hauptturbine möglich, d.h. die Fluidarbeitsmaschine kann zu- oder abgeschaltet werden, während die Hauptturbine weiter betrieben wird. Durch die dadurch ebenfalls bedingte schnelle Möglichkeit des Trennens ist ein einfacher Überlastschutz möglich.

Durch den Antrieb über die Hauptturbine kann auf eine separate Antriebseinrichtung für die Fluidarbeitsmaschine verzichtet werden und die Antriebsleistung der Fluidarbeitsmaschine zur Verdichtung des an der Hauptarbeitsturbine anfallenden Abgases kann durch die Ankoppelung über das hydrodynamische Getriebeelement an die Hauptarbeitsturbine direkt angepasst werden.

Gemäß einem zweiten Aspekt ist die Druckbeaufschlagungsvorrichtung Bestandteil eines Turbinenkraftwerkes. Das Turbinenkraftwerk umfasst zumindest:
a) eine Turbine, insbesondere eine Hauptturbine, mit einer Abtriebswelle und insbesondere wenigstens einem umlaufend um die Abtriebswelle angeordneten Schaufelkranz mit einer Vielzahl von Turbinenschaufeln, die unmittelbar oder mittelbar mit einem Fluid antreibbar sind, welches zur Beaufschlagung der Turbinenschaufeln mit einem Drehmoment, insbesondere mittels eines Verbrennungsvorgangs, erhitzt und/oder unter Druck gesetzt wird,
b) einen Generator, der mit der Abtriebswelle zur Drehmomentübertragung verbunden ist und insbesondere zur Umwandlung eines an der Abtriebswelle anliegenden Drehmoments in elektrische Energie eingerichtet ist.

Die Abtriebswelle der Turbine ist dazu eingerichtet, mit einer Antriebswelle einer Druckbeaufschlagungsvorrichtung nach einer Ausführung der Erfindung gekoppelt zu werden.

Gemäß einer Ausführung ist c) eine Druckbeaufschlagungsvorrichtung nach einer Ausführung der Erfindung ein Bestandteil des Turbinenkraftwerks, wobei dann insbesondere die Abtriebswelle die Turbine und die Antriebswelle der Druckbeaufschlagungsvorrichtung dazu eingerichtet sind, mit dem jeweils anderen zur Drehmomentübertragung gekoppelt zu werden.

Gemäß einer Ausführung weist das Turbinenkraftwerk eine d) Abgasführung auf, die dazu eingerichtet ist, Abgase aus der Verbrennung von einer Brennkammer des Turbinenkraftwerks zu einem Einlass der Druckbeaufschlagungsvorrichtung zu führen. Entlang der Abgasführung kann gemäß einer Ausführung eine Nachbehandlung des Abgases, beispielsweise im Sinne einer Kohlenstoffdioxid-Abscheidung und/oder einer Kühlung der Abgase und/oder einer Heizung der Abgase und/oder einer Entspannung der Abgase und/oder einer Komprimierung der Abgase vorgesehen sein. Dabei kann beispielsweise zuerst das Abgas komprimiert und anschließend Kohlenstoffdioxid abgeschieden werden, oder Kohlenstoffdioxid wird zuerst abgeschieden und anschließend komprimiert.

Gemäß einem dritten Aspekt wird ein Verfahren zum Druckbeaufschlagen von Abgasen eines Turbinenkraftwerks bereitgestellt. Das Verfahren weist zumindest die folgenden Verfahrensschritte auf, die entsprechend der angegebenen Reihenfolge oder einer beliebigen sinnvollen anderen Reihenfolge durchlaufen werden können:
i) Beaufschlagen wenigstens einer Teilmenge, insbesondere einer Kohlenstoffdioxid-reichen Teilmenge, der Abgase des Kraftwerks mit einem Druck mittels einer Fluidarbeitsmaschine einer Druckbeaufschlagungsvorrichtung, die insbesondere gemäß einer Ausführung der Erfindung ausgebildet ist; gemäß einer Ausführung werden die gesamten Abgase mit dem Druck beaufschlagt;
ii) Beaufschlagen und/oder Antreiben der Fluidarbeitsmaschine mit einem an einer Abtriebswelle einer Hauptturbine des Kraftwerks anliegenden Drehmoment, insbesondere unmittelbar und/oder mittelbar, mittels einer Verbindung und/oder Kopplung dieser Abtriebswelle mit einer Antriebswelle der Fluidarbeitsmaschine; unter einer Kopplung ist vorliegend insbesondere eine lösbare, im nicht gelösten Zustand drehfeste, Verbindung zu verstehen;

Der Erfindung liegt unter anderem die Überlegung zugrunde, dass bei bekannten Dampfturbinenkraftwerken mit Post-Combustion-CCS der Abgasverdichter im Regelfall elektrisch betrieben wird, was erhebliche Transformations-Verluste mit sich bringt. Gleichzeitig ist der bei Pre-Combustion-CCS praktizierte Ansatz, einen Luftverdichter auf der Abtriebswelle der Hauptturbine zu platzieren, für die Abgasverdichtung nicht zielführend, weil die benötigte Verdichtungsleistung und die mittels der Hauptturbine bereitgestellte Leistung nicht in allen Betriebsfällen direkt proportional zueinander sind. Als Beispiel seien hier nur die Anfahrphase des Kraftwerks oder der Zeitversatz bei der Dampfgenerierung in Dampfturbinenkraftwerken genannt.

Die Erfindung basiert nun unter anderem auf der Idee, häufig als Einheit verbaute Dampfturbinengeneratorsätze derart zur Drehmomentübertragung mit dem Abgas Verdichter zu koppeln, dass die Verdichterleistung zwar einerseits ohne Transformationsverluste, aber andererseits steuerbar bzw. regelbar erbracht werden kann, und zwar zumindest teilweise, insbesondere vollständig unabhängig von der jeweiligen Leistung der Hauptturbine.

Im Sinne der Erfindung werden dazu die Abtriebswelle der Turbine einerseits und die Antriebswelle des Verdichters andererseits dazu eingerichtet, miteinander zur Drehmomentübertragung verbunden zu werden. Insbesondere ist also zur Verbindung ein geeignetes Leistungsübertragungselement zwischen den beiden Wellen vorgesehen.

Der Erfindungsgedanke ist nicht nur auf Dampfturbinenkraftwerke anwendbar, sondern auch auf Gasturbinenkraftwerke und andere Turbinenkraftwerke. Zudem betrifft der Erfindungsgedanke nicht nur Systeme, bei denen Kohlenstoffdioxid komprimiert werden soll, sondern ebenso Systeme, bei denen bereits komprimiertes Kohlenstoffdioxid im Sinne eines Pumpens gefördert werden soll.

Mit der Erfindung kann die benötigte Antriebsenergie für die Druckbeaufschlagungsvorrichtung direkt mechanisch am Turbinengeneratorsatz abgenommen werden. Damit kann - insbesondere verglichen mit einem elektrischen Antrieb der Druckbeaufschlagungsvorrichtung - ein hoher Wirkungsgrad erreicht werden, weil durch den direkten Antrieb keine weiteren elektrischen Übertragungselemente benötigt werden.

Die Druckbeaufschlagungsvorrichtung kann je nach Bedarf zu- oder abgeschaltet werden, während der Dampfturbinengeneratorsatz weiter läuft, insbesondere wenn ein lösbares und/oder ggf. regelbares Leistungsübertragungselement verwendet wird.

Gemäß einer Ausführung weist die Fluidarbeitsmaschine eine Antriebswelle auf, die dazu eingerichtet ist, mit der Abtriebswelle der Hauptturbine zur Drehmomentübertragung gekoppelt zu werden. Dadurch ist eine lösbare Drehmomentübertragung von der Abtriebswelle der Turbine an den Antrieb der Druckbeaufschlagungsvorrichtung möglich.

Um Bauraum einzusparen, ist gemäß einer Ausführung die Antriebswelle der Fluidarbeitsmaschine koaxial zu einer Abtriebswelle der Hauptturbine anordenbar. Dazu können insbesondere koaxiale Leistungsübertragungselemente wie beispielsweise Reibkupplungen, hydrodynamische Kupplungen, Drehmomentwandler und/oder Planetengetriebe, aber auch geeignete Kombinationen von Getriebestufen verwendet werden.

Gemäß einer Ausführung ist die Antriebswelle der Fluidarbeitsmaschine zusätzlich als Abtriebswelle der Hauptturbine ausgebildet oder fest mit dieser verbindbar, insbesondere wenn es für eine spezifische Anwendung nicht erforderlich ist, die Druckbeaufschlagungsvorrichtung unabhängig von der Drehzahl der Abtriebswelle der Turbine zu regeln.

Um eine Anpassung der Leistung und/oder der Drehzahl der Druckbeaufschlagungsvorrichtung zu ermöglichen, weist gemäß einer Ausführung die Druckbeaufschlagungsvorrichtung ein mit der Antriebswelle der Fluidarbeitsmaschine verbundenes Leistungsübertragungselement, insbesondere eine Kupplung und/oder ein Getriebe auf, das mit der Abtriebswelle der Hauptturbine verbindbar, insbesondere verbunden, ist.

Je nach spezifischen Anforderungen der Kopplung der Abtriebswelle der Turbine einerseits und der Antriebswelle der Druckbeaufschlagungsvorrichtung andererseits (beispielsweise hinsichtlich Drehzahl und/oder Druckbeaufschlagungsleistung) können nachfolgende Leistungsübertragungselemente vorteilhaft verwendet werden, insbesondere: (1) Drehmomentwandler mit Durchschaltung (wie z.B. aus der Produktlinie Vosycon der Anmelderin) und/oder (2) hydrodynamische Kupplungen (mit oder ohne Durchschaltung) (3) und diese in Kombination mit mechanischen Getriebestufen und/oder (4) Planentengetrieben (wie z.B. aus der Produktlinie Vorecon der Anmelderin, beispielsweise mit Anfahrkupplung). Die vorteilhafte Auswirkung auf Weiterbildungen der Erfindung für verschiedene dieser Elemente bzw. Kombinationen davon ist nachfolgend für unterschiedliche Ausführungen beschrieben.

Um beispielsweise eine Entkopplung der Druckbeaufschlagungsvorrichtung von der Turbine beim Anfahren des Kraftwerks zu ermöglichen, weist gemäß einer Ausführung das Leistungsübertragungselement wenigstens ein hydrodynamisches Getriebeelement auf.

Insbesondere weist das hydrodynamische Getriebeelement einen Drehmomentwandler und/oder eine hydrodynamische Kupplung, insbesondere, ggf. jeweils, mit einer Überbrückungskupplung, sprich mit einer Möglichkeit zur Durchschaltung, auf. Mit einer hydrodynamischen Kupplung kann über die Anpassung des Befüllungsgrads mit einem Arbeitsöl die Ausgangsdrehzahl an der Antriebswelle der Druckbeaufschlagungsvorrichtung beeinflusst werden. Mit einem Drehmomentwandler kann zudem das Ausgangsdrehmoment und damit die Verdichtungs- und/oder Pumpleistung der Druckbeaufschlagungsvorrichtung beeinflusst werden. Mit einer Überbrückungskupplung können eventuelle Verluste aus der hydrodynamischen Kopplung der beiden Wellen minimiert oder vermieden werden.

Insbesondere zur stufenlosen Regelung der Drehzahl und/oder für die Möglichkeit der Entkopplung der Druckbeaufschlagungsvorrichtung von der Abtriebswelle der Turbine weist gemäß einer Ausführung das hydrodynamische Getriebeelement einen, insbesondere stufenlos, regelbaren Befüllungsgrad mit einem Arbeitsöl auf.

Insbesondere um eine große Drehzahldifferenz zwischen einer Drehzahl der Abtriebswelle zu der Turbine einerseits und einer gewünschten Drehzahl der Antriebswelle der Druckbeaufschlagungsvorrichtung andererseits zu ermöglichen, weist gemäß einer Ausführung das Leistungsübertragungselement wenigstens eine mechanische Getriebestufe auf. Insbesondere weist die mechanische Getriebestufe eine Stirnradstufe und/oder eine Kegelradstufe und/oder ein Planetengetriebe auf, wobei die Umsetzung der Getriebekombination zur Realisierung eines bestimmten Übersetzungs- oder Untersetzungsverhältnisses im Ermessen der Fachleute liegt.

Ein weiterer Vorteil des Einsatzes eines hydrodynamischen Getriebeelementes besteht darin, dass eine Entkoppelung der Arbeitsmaschine auch bei weiter-laufender Hauptturbine erfolgen kann und auch ein Überlastschutz realisierbar ist.

Gemäß einer Ausführung ist die Turbine, insbesondere die Hauptturbine, des Turbinenkraftwerks als Dampfturbine ausgebildet. Das (Dampfturbinen-)Kraftwerk ist dann zur Verbrennung eines Brennstoffes ausgebildet, der bei seiner Verbrennung ein Fluid, insbesondere Wasser, erhitzt und/oder unter Druck setzt, das als Antriebsfluid der Turbine dient. Das Kraftwerk weist in dieser Ausführung eine Druckbeaufschlagungsvorrichtung gemäß einer Ausführung der Erfindung auf, die dazu eingerichtet ist, Abgase, insbesondere Kohlenstoffdioxid, aus der Verbrennung des Brennstoffes mit einem Druck zu beaufschlagen, insbesondere zu komprimieren, insbesondere sodass zumindest ein Anteil der Abgase in einen flüssigen Zustand überführt wird.

Gemäß einer Ausführung ist die Turbine, insbesondere die Hauptturbine, des Turbinenkraftwerks als Gasturbine ausgebildet. Das (Gasturbinen-)Kraftwerk ist dann zur Verbrennung eines, insbesondere gasförmigen, Brennstoffs ausgebildet, der bei und/oder nach der Verbrennung als Antriebsfluid der Turbine dient.

Das Kraftwerk weist in dieser Ausführung eine Druckbeaufschlagungsvorrichtung gemäß einer Ausführung der Erfindung auf, die dazu eingerichtet ist, Abgase, insbesondere Kohlenstoffdioxid, aus der Verbrennung des Brennstoffs mit einem Druck zu beaufschlagen, insbesondere zu komprimieren, insbesondere sodass zumindest ein Anteil der Abgase in einen flüssigen Zustand überführt wird.

Um eine direkte Drehmomentübertragung mit einer Möglichkeit zur Entkopplung zu verbinden, werden gemäß einer Ausführung die Abtriebswelle der Hauptturbine und die Antriebswelle der Fluidarbeitsmaschine mittels eines Leistungsübertragungselements verbunden, insbesondere gekoppelt.

Die Möglichkeit zur Herstellung und/oder zur Entkopplung der Drehmomentübertragung wird beispielsweise verwendet, wenn gemäß einer Ausführung die Verbindung zwischen der Abtriebswelle und der Fluidarbeitsmaschine zum Anfahren des Kraftwerks gelöst und/oder bei Erreichen eines vorbestimmten Schließkriteriums, wie insbesondere einer Minimaldrehzahl der Abtriebswelle und/oder eines Minimaldrehmoments an der Abtriebswelle, hergestellt wird.

Um einen flexiblen Einsatz der Druckbeaufschlagungsvorrichtung zu ermöglichen, wird gemäß einer Ausführung eine Drehzahl der Fluidarbeitsmaschine und/oder einer Antriebswelle der Fluidarbeitsmaschine, insbesondere im Betrieb, an einen Fluidarbeits-Bedarf, insbesondere an einen Verdichtungs- und/oder Pumpbedarf, der Druckbeaufschlagungsvorrichtung angepasst, insbesondere mittels wenigstens eines Leistungsübertragungselements, wie beispielsweise wenigstens einer Kupplung und/oder wenigstens eines Getriebeelementes und/oder wenigstens einer Getriebestufe.

Weitere Vorteile und Anwendungsmöglichkeiten der Erfindung ergeben sich aus der nachfolgenden Beschreibung im Zusammenhang mit den Figuren.
- Fig. 1: zeigt ein Dampf-Turbinenkraftwerk mit einer Druckbeaufschlagungsvorrichtung nach einer beispielhaften Ausführung der Erfindung in einer Schemaansicht.
- Fig. 2: zeigt ein Gas-Turbinenkraftwerk mit einer Druckbeaufschlagungsvorrichtung nach einer beispielhaften Ausführung der Erfindung in einer Schemaansicht.
- Fig. 3: zeigt in einer schematischen Detailansicht eine Reibkupplung als Leistungsübertragungselement für eine Druckbeaufschlagungsvorrichtung nach einer beispielhaften Ausführung der Erfindung in einem Kraftwerk gemäß Fig. 1 oder einem Kraftwerk gemäß Fig. 2.
- Fig. 4: zeigt in einer schematischen Detailansicht eine hydrodynamische Kupplung als Leistungsübertragungselement für eine Druckbeaufschlagungsvorrichtung nach einer beispielhaften Ausführung der Erfindung in einem Kraftwerk gemäß Fig. 1 oder einem Kraftwerk gemäß Fig. 2.
- Fig. 5: zeigt in einer schematischen Detailansicht einen hydrodynamischen Drehmomentwandler mit einer Stirnradstufe als Leistungsübertragungselement für eine Druckbeaufschlagungsvorrichtung nach einer beispielhaften Ausführung der Erfindung in einem Kraftwerk gemäß Fig. 1 oder einem Kraftwerk gemäß Fig. 2.
- Fig. 6: zeigt in einer schematischen Detailansicht ein Planetengetriebe als Leistungsübertragungselement für eine Druckbeaufschlagungsvorrichtung nach einer beispielhaften Ausführung der Erfindung in einem Kraftwerk gemäß Fig. 1 oder einem Kraftwerk gemäß Fig. 2.
- Fig. 7: zeigt in einer schematischen Detailansicht eine Reihenschaltung einer hydrodynamischen Kupplung, eines hydrodynamischen Drehmomentwandlers und eines Planetengetriebes als Leistungsübertragungselement für eine Druckbeaufschlagungsvorrichtung nach einer beispielhaften Ausführung der Erfindung in einem Kraftwerk gemäß Fig. 1 oder einem Kraftwerk gemäß Fig. 2.

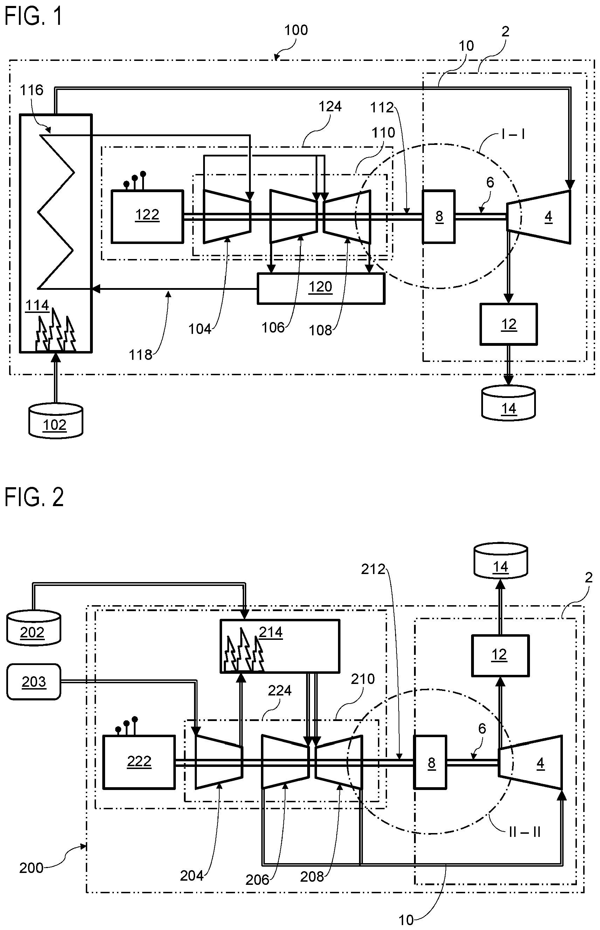

Im Ausführungsbeispiel nach Fig. 1 ist ein als Dampfturbinenkraftwerk ausgebildetes Turbinenkraftwerk 100 schematisch dargestellt. Das Dampfturbinenkraftwerk 100 ist zur Verbrennung eines gasförmigen Brennstoffs, wie beispielsweise Erdgas oder Methan, in einer Brennkammer 114 eingerichtet, wobei der Brennstoff beispielsweise aus einem Tank 102 zugeführt werden kann. In der Brennkammer 114 ist ein Wärmetauscher 116 eines Dampfkreislaufs 118 angeordnet, wobei die Verbrennungswärme des Brennstoffs einem Erhitzen und/oder Unter-Druck-setzen von Wasser in den Dampfkreislauf 118 dient.

Das Dampfturbinenkraftwerk 100 weist eine Dampfturbine 110 mit einem Hochdruck-Dampfexpander 104 und zwei Niederdruck-Dampfexpandern 106 und 108 auf, an denen sich der mit der Verbrennungswärme beaufschlagte Dampf entspannen und dabei die Expander mit einer Drehbewegung beaufschlagen kann. Nach der Expansion des Dampfes sammelt sich dieser in einem Kondensator 120. Aus dem Kondensator 120 kann dem Wärmetauscher 116 erneut Wasser zu verdampfen zugeführt werden.

Die Expander 104, 106 und 108 bilden gemeinsam die Dampfturbine 110 aus und sind dazu eingerichtet, insbesondere durch die Expansion des Dampfers an den Expandern, eine gemeinsame Abtriebswelle 112 anzutreiben.

Die Abtriebswelle 112 ist mit einem Generator 122 zur Drehmomentübertragung verbunden. Der Generator 122 ist zur Umwandlung eines an der Abtriebswelle 112 anliegenden Drehmoments in elektrische Energie eingerichtet. Beispielsweise kann die Anordnung der Dampfturbine 110 und des Generators 122 in Form einer integrierten Generator-Turbinen-Einheit 124 (auch als Generatorturbinensatz bezeichnet) bereitgestellt werden.

Das Kraftwerk 100 weist zudem eine Druckbeaufschlagungsvorrichtung 2 für Abgase aus der Brennkammer 114 auf, wobei die Druckbeaufschlagungsvorrichtung 2 zumindest eine (im Ausführungsbeispiel) als Verdichter ausgebildete Fluidarbeitsmaschine 4 zur Verdichtung gasförmiger Anteile der Abgase aus der Brennkammer 114 aufweist.

Die Fluidarbeitsmaschine 4 weist eine Antriebswelle 6 auf, die dazu eingerichtet ist, mit der Abtriebswelle 112 der Dampfturbine 110 zur Drehmomentübertragung mittels eines Leistungsübertragungselements 8 gekoppelt (d. h. verbunden) zu werden.

Die Fluidarbeitsmaschine 4 kann im Betrieb zugeführte Abgase aus einer Abgasführung 10 komprimieren (und dabei gegebenenfalls verflüssigen) und einer Einrichtung 12 zum Abscheiden von Kohlenstoffdioxid aus den komprimierten Abgasen zu führen. Das abgeschiedene Kohlenstoffdioxid kann anschließend beispielsweise in eine geeignete Lagerstätte 14 verpresst werden, insbesondere mittels eines CCS-Prozesses.

Durch die Kopplung der Abtriebswelle 112 und der Antriebswelle 6 mittels des Leistungsübertragungselemente 8 kann eine für einen CCS-Prozess benötigte Verdichterleistung ohne Transformationsverluste und zusätzlich ohne eine rein proportionale Abhängigkeit der Verdichterleistung von der Turbinenleistung aufgebracht werden.

In der Fig. 2 ist ein Turbinenkraftwerk 200 schematisch dargestellt, das sich von dem Kraftwerk 100 gemäß Fig. 1 insbesondere darin unterscheidet, dass es als Gasturbinenkraftwerk ausgebildet ist. Die Antriebsenergie wird also nicht mittelbar über einen Dampfkreislauf aufgebracht; vielmehr wird die Gasturbine 210 direkt mit den Verbrennungsabgasen aus der Verbrennung des Brennstoffs beaufschlagt.

Dazu weist die Gasturbine 210 einen Luftverdichter 204 zum Verdichten von Luft, beispielsweise Luft aus der Umgebung 203, auf, wobei der Brennstoff beispielsweise aus einem Tank 202 in eine Brennkammer 214 zugeführt werden kann, insbesondere unter Druck eingespritzt oder eingesprüht werden kann. Die verdichtete Luft wird ebenfalls der Brennkammer 214 zugeführt, sodass das in der Brennkammer 214 entstehende, verdichtete Gemisch anschließend entzündet und auf zwei Expander 206 und 208 der Gasturbine 210 geleitet werden kann.

Die beiden Expander 206 und 208 sind drehfest mit einer Abtriebswelle 212 der Gasturbine 210 verbunden, die einen Generator 222 antreiben kann. Beispielsweise kann die Anordnung der Gasturbine 210 und des Generators 222 in Form einer integrierten Generator-Turbinen-Einheit 224 bereitgestellt werden.

Auch das Kraftwerk 200 weist zudem eine Druckbeaufschlagungsvorrichtung 2 für Abgase auf. Die Druckbeaufschlagungsvorrichtung 2 unterscheidet sich im Ausführungsbeispiel nicht von der Druckbeaufschlagungsvorrichtung 2 gemäß Fig. 1. Lediglich werden die Abgase von den Auslässen der Expander 206, 208 aus in einer Abgasführung 10 zugeführt, anstatt aus der Brennkammer 114.

Auch im Ausführungsbeispiel der Fig. 2 weist die Fluidarbeitsmaschine 4 daher eine Antriebswelle 6 auf. Diese ist dazu eingerichtet, mit der Abtriebswelle 212 der Dampfturbine 210 zur Drehmomentübertragung mittels eines Leistungsübertragungselements 8 gekoppelt (d. h. verbunden) zu werden.

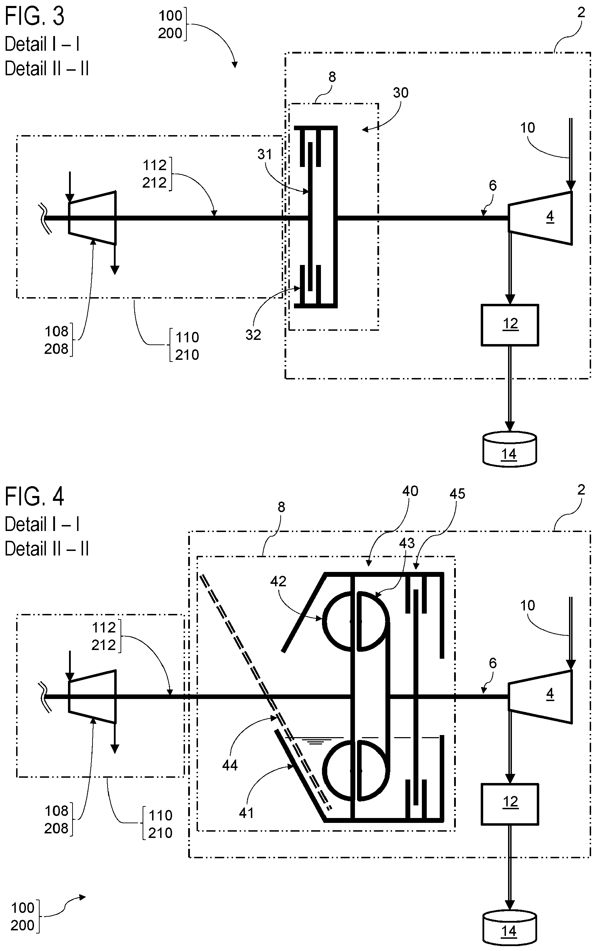

Durch die Verwendung unterschiedlicher Leistungsübertragungselemente 8 können gemäß verschiedenen beispielhaften Ausführungen der Erfindung unterschiedliche weitere Vorteile realisiert werden. Entsprechende Ausführungsbeispiele sind in den nachfolgend beschriebenen Figuren 3 bis 7 dargestellt. Die dort dargestellten, vorteilhaft zu verwendenden Leistungsübertragungselemente 8 können jeweils unabhängig davon Verwendung finden, ob sie bei einem Dampfturbinenkraftwerk 100 gemäß Fig. 1 oder bei einem Gasturbinenkraftwerk 200 gemäß Fig. 2 eingesetzt werden. Dementsprechend sind die Fig. 3 bis 7 so zu verstehen, dass sie sowohl das Detail I - I aus Fig. 1 als auch das Detail II - II aus Fig. 2 zeigen können.

Im Ausführungsbeispiel der Fig. 3 ist das Leistungsübertragungselement 8 als einfache Reibkupplung 30 - nötigenfalls mit einer ausreichenden, nicht dargestellten Flüssigkeitskühlung - ausgeführt. Die Reibkupplung 30 weist eine Kupplungsscheibe 31 sowie ein Schließelement 32 auf.

Beispielsweise zum Anfahren des Turbinenkraftwerks 100 bzw. 200 kann das Schließelement 32 in eine offene Stellung geschalten werden, sodass die Antriebswelle 6 der Fluidarbeitsmaschine 4 von dem Drehmoment der Abtriebswelle 112 bzw. 212 des Kraftwerks entkoppelt bleibt. So kann das Kraftwerk 100 bzw. 200 schnell hochfahren, ohne beim Hochfahren die Fluidarbeitsmaschine 4 mitziehen zu müssen.

Bei Erreichen eines Schließkriteriums, hier einer Arbeitsdrehzahl der Abtriebswelle 112, 212, kann das Schließelement 32 in eine geschlossene Stellung geschalten werden, sodass das Drehmoment der Abtriebswelle 112 bzw. 212 an der Antriebswelle 6 der Fluidarbeitsmaschine 4 anliegt.

Im Ausführungsbeispiel der Fig. 3 kann auch eine teilweise geschlossene Stellung des Schließelements 32 vorgesehen sein, sodass die Antriebswelle 6 mit einem gewissen Schlupf bezüglich der Abtriebswelle 112 bzw. 212 dreht. Auf diese Weise kann eine Drehzahlvariation der Antriebswelle 6 erreicht werden und damit die Verdichterleistung in einem bestimmten Drehzahlbereich angepasst werden.

Im Ausführungsbeispiel der Fig. 4 ist das Leistungsübertragungselement 8 als hydrodynamische Kupplung 40 ausgebildet. Die hydrodynamische Kupplung 40 weist ein Gehäuse 41 auf, welches mit einem Arbeitsöl gefüllt ist. Mittels des Arbeitsöls kann Drehmoment von einem Pumpenrad 42, das mit der Abtriebswelle 112 bzw. 212 drehfest verbunden ist, auf ein Turbinenrad 43, das mit der Antriebswelle 6 drehfest verbunden ist, übertragen werden.

Das Drehzahlverhältnis zwischen der Abtriebswelle 112 bzw. 212 einerseits und der Antriebswelle 6 lässt sich unter anderem durch einen Befüllungsgrad des Gehäuses 41 mit dem Arbeitsöl regeln. Je höher der Befüllungsgrad mit Arbeitsöl ist, desto höher ist die Drehzahl der Antriebswelle 6. Der Befüllungsgrad mit Arbeitsöl kann beispielsweise mittels eines verstellbaren Schöpfrohres 44 eingestellt werden.

Eine identische Drehzahl der Wellen 112 bzw. 212 einerseits und 6 andererseits kann mittels einer Überbrückungskupplung 45 zum mechanischen Durchschalten der hydrodynamischen Kupplung 40 erreicht werden.

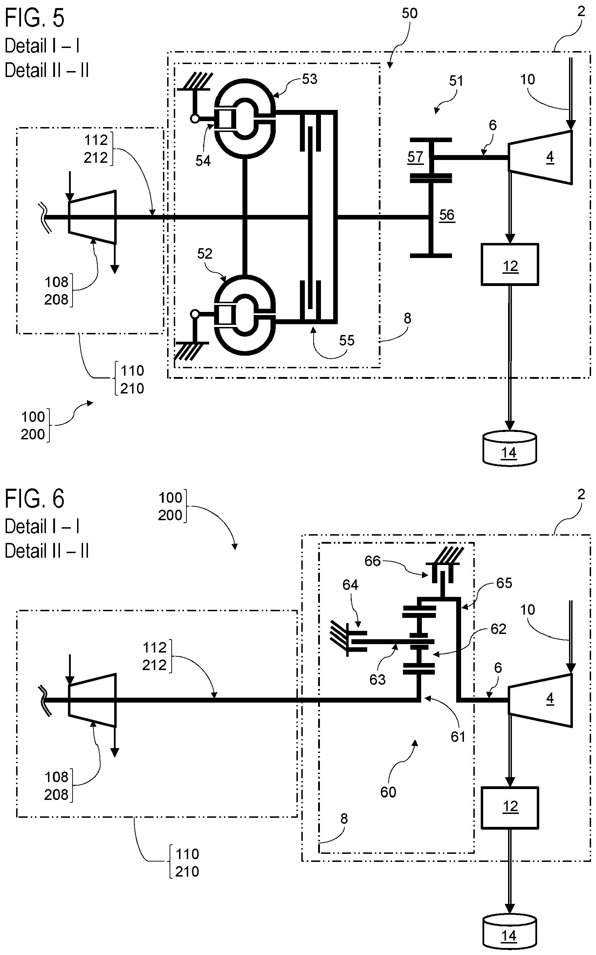

Im Ausführungsbeispiel der Fig. 5 weist das Leistungsübertragungselement 8 in Reihe geschaltet einen hydrodynamische Drehmomentwandler 50 und eine Stirnradstufe 51 auf.

Der hydrodynamische Drehmomentwandler 50 weist neben einem Pumpenrad 52 und einem Turbinenrad 53 Leitschaufeln 54 auf. Je nach Einstellung der Leitschaufeln 54 wird das Turbinenrad 53 langsamer oder schneller von einem Arbeitsöl angeströmt, sodass auf diese Weise die übertragene Drehzahl variierbar ist. Damit kann die verfügbare Verdichterleistung der Fluidarbeitsmaschine 4 in einem bestimmten Drehzahlbereich stufenlos angepasst werden.

Der hydrodynamische Drehmomentwandler 50 weist zudem noch eine Überbrückungskupplung 55 auf, mittels der die Wellen 112 bzw. 212 einerseits und 6 andererseits mechanisch drehfest aneinander gekoppelt werden können.

Die Stirnradstufe 51 dient hingegen einer Anpassung einer Regeldrehzahl zum Betrieb der Fluidarbeitsmaschine 4. Je nach Durchmesserverhältnis der beiden Stirnräder 56 und 57 kann die Drehzahl an der Ausgangsseite des Drehmomentwandler 50 übersetzt oder untersetzt werden, je nach Anforderung der Fluidarbeitsmaschine 4.

Im Ausführungsbeispiel der Fig. 6 weist das Leistungsübertragungselement 8 ein als Planetengetriebe ausgeführtes Umlaufgetriebe 60 auf. Das Umlaufgetriebe 60 weist ein Sonnenrad 61 auf, das drehfest mit der Abtriebswelle 112 bzw. 212 verbunden ist. Um das Sonnenrad 61 herum sind Planeten 62 angeordnet, wobei der Planetenträger 63 mittels einer lösbaren Planeten-Kupplung 64 zur Drehung freigegeben oder festgelegt werden kann. Um die Planeten 62 ist ein Hohlrad 65 angeordnet, welches mittels einer Hohlrad-Kupplung 66 zur Drehung freigegeben oder festgelegt werden kann. Das Hohlrad ist drehfest mit der Antriebswelle 6 der Fluidarbeitsmaschine 4 verbunden.

Beispielsweise kann zum Anfahren des Kraftwerks 100 bzw. 200 die Abtriebswelle 112 bzw. 212 von der Fluidarbeitsmaschine entkoppelt werden, indem die Hohlrad-Kupplung 66 in einen geschlossenen Zustand und die Planeten-Kupplung 64 in einen geöffneten Zustand geschalten wird. Auf diese Weise dreht die Abtriebswelle 112 bzw. 212 lastlos die Planeten 62, während das Hohlrad und damit die Antriebswelle 6 gegen Drehung festgelegt sind.

Wenn das Kraftwerk einmal angefahren ist, kann die Hohlrad-Kupplung 66 gelöst werden. Dann - im normalen Betrieb - sind über ein Öffnen oder Schließen der Planeten-Kupplung 64 zumindest 2 Drehzahlstufen für die Antriebswelle 6 und damit die Fluidarbeitsmaschine 4 schaltbar.

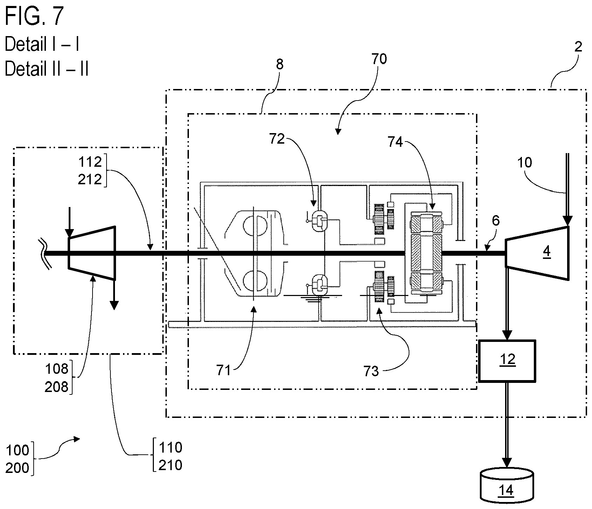

Im Ausführungsbeispiel der Fig. 7 weist das Leistungsübertragungselement 8 eine in einem Gehäuse integrierte Kombination mehrerer Getriebeelemente zu einem regelbaren Getriebe 70 auf. Derartige integrierte regelbare Getriebe 70 werden unter dem Markennamen VORECON^{©} von der Anmelderin vertrieben.

Bei dem Getriebe 70 in Fig. 7 sind in Reihe eine hydrodynamische Kupplung 71 (beispielsweise wie die Kupplung 40 aus Fig. 4), ein hydrodynamischer Drehmomentwandler 72 (beispielsweise wie der Wandler 50 aus Fig. 5), ein stationäres Planetengetriebe 73 und ein als Planetengetriebe ausgebildetes Umlaufgetriebe 74 geschaltet.

Beispielsweise zum Anfahren des Kraftwerks 100 bzw. 200 ist die hydrodynamische Kupplung 71 entleert und seine Überbrückungskupplung geöffnet. Die Abtriebswelle 112 bzw. 212 einerseits und Antriebswelle 6 andererseits sind entkoppelt; der Hochlauf des Kraftwerks 100 bzw. 200 kann nahezu lastlos erfolgen.

Die hydrodynamische Kupplung 71 wird nach Hochlauf des Kraftwerks 100 bzw. 200 mit Arbeitsöl befüllt und überträgt Leistung. Die Fluidarbeitsmaschine 4 beschleunigt dabei sanft auf eine Minimaldrehzahl.

Die Überbrückungskupplung schließt anschließend und überbrückt die hydrodynamische Kupplung 71. Die Drehzahlregelung der Fluidarbeitsmaschine 71 erfolgt dann durch die verstellbaren Leitschaufeln im Drehmomentwandler 72.

Die Abtriebswelle 112 bzw. 212 ist mit dem Hohlrad des Umlaufgetriebes 74 verbunden. Ein Großteil der Eingangsleistung wird dadurch direkt mechanisch und nahezu verlustfrei auf das Umlaufgetriebe 74 übertragen.

Zusätzlich ist ein hydrodynamischer Drehmomentwandler 72 mit der Abtriebswelle 112 bzw. 212 gekoppelt. Das Pumpenrad des Drehmomentwandlers ist mit der Abtriebswelle 112 bzw. 212 verbunden und zweigt einen geringen Teil der Eingangsleistung ab.

Ein Arbeitsöl-Strom überträgt diese abgezweigte Leistung vom Pumpenrad auf das Turbinenrad des Drehmomentwandlers 72 (hydrodynamische Leistungsübertragung). Die abgezweigte Leistung gelangt über das Turbinenrad zum Planetenträger des Planetengetriebes, wobei zur Anpassung einer Grunddrehzahl das stationäre Planetengetriebe 73 vorgesehen ist, in dem die Planeten eine Stirnradstufe aufweisen.

Die Leistung aus dem Hohlrad und die Leistung aus dem Planetenträger addieren sich im Umlaufgetriebe 74. Die Planetenräder übertragen die summierte Leistung auf das Sonnenrad, die Antriebswelle 6 und schließlich auf die Fluidarbeitsmaschine 4.

Verstellbare Leitschaufeln im Drehmomentwandler 72 steuern den Arbeitsöl-Strom und bestimmen die Drehzahl des Turbinenrads. Damit lässt sich die Drehzahl der Fluidarbeitsmaschine 4 in einem gewissen Drehzahlbereich stufenlos einstellen.

### BEZUGSZEICHENLISTE

- 2: Druckbeaufschlagungsvorrichtung
- 4: Fluidarbeitsmaschine
- 6: Antriebswelle
- 8: Leistungsübertragungselement
- 10: Abgasführung
- 12: Kohlenstoffdioxid-Abscheidungs-Einrichtung
- 14: Kohlenstoffdioxid-Lagerstätte

- 30: Reibkupplung
- 31: Kupplungsscheibe
- 32: Schließelement

- 40: hydrodynamische Kupplung
- 41: Gehäuse
- 42: Pumpenrad
- 43: Turbinenrad
- 44: Schöpfrohr
- 45: Überbrückungkupplung

- 50: hydrodynamischer Drehmomentwandler
- 51: Stirnradstufe
- 52: Pumpenrad
- 53: Turbinenrad
- 54: Leitschaufeln
- 55: Überbrückungskupplung
- 56, 57: Stirnräder

- 60: Umlaufgetriebe, insbesondere Planetengetriebe
- 61: Sonnenrad
- 62: Planeten
- 63: Planetenträger
- 64: Planeten-Kupplung
- 65: Hohlrad
- 66: Hohlrad-Kupplung

- 70: regelbares Getriebe
- 71: hydrodynamische Kupplung
- 72: hydrodynamische Drehmomentwandler
- 73: stationäres Planetengetriebe
- 74: Umlaufgetriebe

- 100: Dampfturbinenkraftwerk
- 102: Brennstofftank
- 104: Hochdruck-Dampfexpander
- 106, 108: Niederdruck-Dampfexpander
- 110: Dampfturbine
- 112: Abtriebswelle
- 114: Brennkammer
- 116: Wärmetauscher
- 118: Dampfkreislauf
- 120: Kondensator
- 122: Generator
- 124: Turbinen-Generator-Einheit

- 200: Gasturbinenkraftwerk
- 202: Brennstofftank
- 203: Umgebung(-sluft)
- 204: Gemischverdichter
- 206, 208: (Gas-)Expander
- 210: Gasturbine
- 212: Abtriebswelle
- 214: Brennkammer
- 222: Generator
- 224: Turbinen-Generatoreinheit

## Patentansprüche

1. **Druckbeaufschlagungsvorrichtung** (2) für Abgase eines Turbinenkraftwerks (100, 200), wobei die Druckbeaufschlagungsvorrichtung zumindest eine Fluidarbeitsmaschine (4) aufweist, die zur Verdichtung gasförmiger Anteile der Abgase und/oder zur Druckbeaufschlagung flüssiger Anteile der Abgase eingerichtet ist,
die Fluidarbeitsmaschine eine Antriebswelle (6) aufweist, die dazu eingerichtet ist, mit einer Abtriebswelle (112, 212) einer Hauptturbine (110,210) des Kraftwerks zur Drehmomentübertragung gekoppelt zu werden;
**dadurch gekennzeichnet, dass**
die Druckbeaufschlagungsvorrichtung ein mit der Antriebswelle der Fluidarbeitsmaschine verbundenes und zumindest ein hydrodynamischen Getriebeelement aufweisendes Leistungsübertragungselement (8) umfasst, das mit der Abtriebswelle der Hauptturbine verbindbar ist.

2. Druckbeaufschlagungsvorrichtung gemäß Anspruch 1,
wobei die Antriebswelle der Fluidarbeitsmaschine koaxial zu der Abtriebswelle der Hauptturbine anordenbar ist.

3. Druckbeaufschlagungsvorrichtung gemäß einem der vorhergehenden Ansprüche,
wobei das Leistungsübertragungselement eine Kupplung (30, 40) und/oder ein Getriebe (50, 60, 70) aufweist.

4. Druckbeaufschlagungsvorrichtung gemäß einem der Ansprüche 1 bis 3,
wobei das hydrodynamische Getriebeelement (40) einen hydrodynamischen Drehmomentwandler (50, 72) und/oder einer hydrodynamische Kupplung (40), insbesondere mit einer Überbrückungskupplung (45), aufweist.

5. Druckbeaufschlagungsvorrichtung gemäß einem der Ansprüche 1 bis 4,
wobei das hydrodynamische Getriebeelement (40) einen, insbesondere stufenlos, regelbaren Befüllungsgrad mit einem Arbeitsöl aufweist.

6. Druckbeaufschlagungsvorrichtung gemäß einem der Ansprüche 1 bis 5,
wobei das Leistungsübertragungselement wenigstens eine mechanische Getriebestufe (51, 60, 73, 74) aufweist.

7. Druckbeaufschlagungsvorrichtung gemäß Anspruch 6,
wobei die mechanische Getriebestufe eine Stirnradstufe (51) und/oder ein Planetengetriebe (60, 74) aufweist.

8. Druckbeaufschlagungsvorrichtung gemäß einem der vorgenannten Ansprüche,
wobei die Fluidarbeitsmaschine frei von einer Kopplung mit einer weiteren Antriebseinrichtung ist.

9. **Turbinenkraftwerk** (100, 200), aufweisend zumindest
- eine Turbine (110, 210) mit einer Abtriebswelle (112, 212),
- einen Generator (122, 222), der mit der Abtriebswelle zur Drehmomentübertragung verbunden ist und zur Umwandlung eines an der Abtriebswelle anliegenden Drehmoments in elektrische Energie eingerichtet ist,
wobei die Abtriebswelle der Turbine dazu eingerichtet ist, mit einer Antriebswelle (6) einer Druckbeaufschlagungsvorrichtung (2) gemäß einem der vorhergehenden Ansprüche 1 bis 8 gekoppelt zu werden.

10. Turbinenkraftwerk (100) gemäß Anspruch 9, wobei die Turbine als Dampfturbine (110) ausgebildet ist, und das Kraftwerk (100) zur Verbrennung eines Brennstoffes ausgebildet ist, der bei seiner Verbrennung ein Fluid, insbesondere Wasser, erhitzt und/oder unter Druck setzt, das als Antriebsfluid der Turbine dient,
wobei die Druckbeaufschlagungsvorrichtung (2)dazu eingerichtet ist, Abgase aus der Verbrennung des Brennstoffes mit einem Druck zu beaufschlagen, insbesondere zu komprimieren.

11. Turbinenkraftwerk (200) gemäß Anspruch 9, wobei die Turbine als Gasturbine (210) ausgebildet ist, und das Kraftwerk (100) zur Verbrennung eines, insbesondere gasförmigen, Brennstoffs ausgebildet ist, der bei und/oder nach der Verbrennung als Antriebsfluid der Turbine dient,
wobei die Druckbeaufschlagungsvorrichtung (2) dazu eingerichtet ist, Abgase aus der Verbrennung des Brennstoffs mit einem Druck zu beaufschlagen, insbesondere zu komprimieren.

12. **Verfahren zum Druckbeaufschlagen von Abgasen** eines Turbinenkraftwerks (100, 200), aufweisend den Verfahrensschritt:
- Beaufschlagen wenigstens einer Teilmenge, insbesondere einer Kohlenstoffdioxid-reichen Teilmenge, der Abgase des Kraftwerks (100, 200) mit einem Druck mittels einer Fluidarbeitsmaschine (4) einer Druckbeaufschlagungsvorrichtung (2), gemäß einem der vorherigen Ansprüche 1 bis 8, aufweisend den Verfahrensschritt:
- Beaufschlagen und/oder Antreiben der Fluidarbeitsmaschine mit einem an einer Abtriebswelle (112, 212) einer Hauptturbine (110, 210) des Kraftwerks anliegenden Drehmoment mittels einer Kopplung dieser Abtriebswelle mit einer Antriebswelle (6) der Fluidarbeitsmaschine.

13. Verfahren gemäß Anspruch 12, aufweisend den Verfahrensschritt:
- Verbinden der Abtriebswelle der Hauptturbine und der Antriebswelle der Fluidarbeitsmaschine mittels eines Leistungsübertragungselements (8).

14. Verfahren gemäß Anspruch 12 oder 13, wobei
- die Verbindung zwischen der Abtriebswelle und der Fluidarbeitsmaschine zum Anfahren des Kraftwerks gelöst und/oder bei Erreichen eines vorbestimmten Schließkriteriums hergestellt wird.

15. Verfahren gemäß einem der Ansprüche 12 bis 14, wobei eine Drehzahl der Fluidarbeitsmaschine und/oder einer Antriebswelle der Fluidarbeitsmaschine an einen Fluidarbeits-Bedarf der Druckbeaufschlagungsvorrichtung angepasst wird.

## Claims

1. **Pressurization device** (2) for exhaust gases of a turbine power plant (100, 200), wherein the pressurization device has at least one fluid working machine (4) which is configured to compress gaseous fractions of the exhaust gases and/or to pressurize liquid fractions of the exhaust gases, the fluid working machine having a drive shaft (6) which is configured to be coupled to an output shaft (112, 212) of a main turbine (110, 210) of the power plant for torque transmission;
**characterized in that**
the pressurization device comprises a power transmission element (8) which is connected to the drive shaft of the fluid working machine and which has at least one hydrodynamic gear mechanism element and which can be connected to the output shaft of the main turbine.

2. Pressurization device according to Claim 1, wherein the drive shaft of the fluid working machine can be arranged coaxially to the output shaft of the main turbine.

3. Pressurization device according to either of the preceding claims, wherein the power transmission element has a clutch (30, 40) and/or a gear mechanism (50, 60, 70).

4. Pressurization device according to one of Claims 1 to 3, wherein the hydrodynamic gear mechanism element (40) has a hydrodynamic torque converter (50, 72) and/or a hydrodynamic clutch (40), in particular with a bridging clutch (45).

5. Pressurization device according to one of Claims 1 to 4, wherein the hydrodynamic gear mechanism element (40) has an, in particular infinitely, adjustable degree of filling with a working oil.

6. Pressurization device according to one of Claims 1 to 5, wherein the power transmission element has at least one mechanical gear mechanism stage (51, 60, 73, 74).

7. Pressurization device according to Claim 6, wherein the mechanical gear mechanism stage has a spur gear stage (51) and/or a planetary gear mechanism (60, 74) .

8. Pressurization device according to one of the preceding claims, wherein the fluid working machine is free from a coupling with a further drive device.

9. **Turbine power plant** (100, 200), having at least
- a turbine (110, 210) with an output shaft (112, 212),
- a generator (122, 222) which is connected to the output shaft for torque transmission and is configured for converting a torque present at the output shaft into electrical energy,
wherein the output shaft of the turbine is configured to be coupled to a drive shaft (6) of a pressurization device (2) according to one of the preceding Claims 1 to 8.

10. Turbine power plant (100) according to Claim 9, wherein the turbine is designed as a steam turbine (110), and the power plant (100) is designed for combusting a fuel which, during its combustion, heats and/or pressurizes a fluid, in particular water, which serves as drive fluid of the turbine, wherein the pressurization device (2) is configured to apply a pressure to, in particular to compress, exhaust gases from the combustion of the fuel.

11. Turbine power plant (200) according to Claim 9, wherein the turbine is designed as a gas turbine (210), and the power plant (100) is designed for combusting an, in particular gaseous, fuel which, during and/or after the combustion, serves as drive fluid of the turbine, wherein the pressurization device (2) is configured to apply a pressure to, in particular to compress, exhaust gases from the combustion of the fuel.

12. **Method for pressurizing exhaust gases** of a turbine power plant (100, 200), comprising the method step of:
- applying a pressure to at least one partial quantity, in particular a carbon dioxide-rich partial quantity, of the exhaust gases of the power plant (100, 200) by means of a fluid working machine (4) of a pressurization device (2) according to one of the preceding Claims 1 to 8,
and comprising the method step of:
- applying a torque to the fluid working machine and/or driving the latter with a torque, which is present at an output shaft (112, 212) of a main turbine (110, 210) of the power plant, by means of coupling this output shaft to a drive shaft (6) of the fluid working machine.

13. Method according to Claim 12, comprising the method step of:
- connecting the output shaft of the main turbine and the drive shaft of the fluid working machine by means of a power transmission element (8).

14. Method according to Claim 12 or 13, wherein
- the connection between the output shaft and the fluid working machine is released for starting up the power plant and/or is established upon achieving a predetermined closing criterion.

15. Method according to one of Claims 12 to 14, wherein a rotational speed of the fluid working machine and/or of a drive shaft of the fluid working machine is adapted to a fluid working requirement of the pressurization device.

## Revendications

1. **Dispositif de pressurisation** (2) pour les gaz d'échappement d'une centrale à turbine (100, 200), le dispositif de pressurisation présentant au moins une machine de travail par fluide (4) qui est conçue pour comprimer des fractions gazeuses des gaz d'échappement et/ou pour pressuriser des fractions liquides des gaz d'échappement,
la machine de travail par fluide présentant un arbre d'entraînement (6) qui est conçu pour être couplé à un arbre de sortie (112, 212) d'une turbine principale (110, 210) de la centrale pour le transfert de couple ;
**caractérisé en ce que**
le dispositif de pressurisation comprend un élément de transfert de puissance (8) relié à l'arbre d'entraînement de la machine de travail par fluide et présentant au moins un élément de transmission hydrodynamique qui peut être relié à l'arbre de sortie de la turbine principale.

2. Dispositif de pressurisation selon la revendication 1, dans lequel l'arbre d'entraînement de la machine de travail par fluide peut être agencé coaxialement à l'arbre de sortie de la turbine principale.

3. Dispositif de pressurisation selon l'une quelconque des revendications précédentes, dans lequel l'élément de transfert de puissance présente un embrayage (30, 40) et/ou un engrenage (50, 60, 70).

4. Dispositif de pressurisation selon l'une quelconque des revendications 1 à 3, dans lequel l'élément de transmission hydrodynamique (40) présente un convertisseur de couple hydrodynamique (50, 72) et/ou un embrayage hydrodynamique (40), notamment avec un embrayage de pontage (45).

5. Dispositif de pressurisation selon l'une quelconque des revendications 1 à 4, dans lequel l'élément de transmission hydrodynamique (40) présente un degré de remplissage réglable, notamment en continu, avec une huile de travail.

6. Dispositif de pressurisation selon l'une quelconque des revendications 1 à 5, dans lequel l'élément de transfert de puissance présente au moins un étage de transmission mécanique (51, 60, 73, 74).

7. Dispositif de pressurisation selon la revendication 6, dans lequel l'étage de transmission mécanique présente un étage de pignon droit (51) et/ou un engrenage planétaire (60, 74).

8. Dispositif de pressurisation selon l'une quelconque des revendications précédentes, dans lequel la machine de travail par fluide est exempte de tout couplage avec un autre appareil d'entraînement.

9. **Centrale à turbine** (100, 200), présentant au moins
- une turbine (110, 210) avec un arbre de sortie (112, 212),
- un générateur (122, 222), qui est relié à l'arbre de sortie pour le transfert de couple et qui est conçu pour convertir un couple appliqué à l'arbre de sortie en énergie électrique,
dans laquelle l'arbre de sortie de la turbine est conçu pour être couplé à un arbre d'entraînement (6) d'un dispositif de pressurisation (2) selon l'une quelconque des revendications 1 à 8 précédentes.

10. Centrale à turbine (100) selon la revendication 9, dans laquelle la turbine est configurée sous forme de turbine à vapeur (110), et la centrale (100) est configurée pour la combustion d'un combustible qui, lors de sa combustion, chauffe et/ou met sous pression un fluide, notamment de l'eau, qui sert de fluide d'entraînement de la turbine,
le dispositif de pressurisation (2) étant conçu pour pressuriser, notamment pour comprimer, les gaz d'échappement provenant de la combustion du combustible.

11. Centrale à turbine (200) selon la revendication 9, dans laquelle la turbine est configurée sous forme de turbine à gaz (210), et la centrale (100) est configurée pour la combustion d'un combustible, notamment gazeux, qui sert de fluide d'entraînement de la turbine pendant et/ou après la combustion,
le dispositif de pressurisation (2) étant conçu pour pressuriser, notamment pour comprimer, les gaz d'échappement provenant de la combustion du combustible.

12. Procédé de pressurisation des gaz d'échappement d'une centrale à turbine (100, 200), présentant l'étape de procédé consistant à :
- pressuriser au moins une quantité partielle, notamment une quantité partielle riche en dioxyde de carbone, des gaz d'échappement de la centrale (100, 200), au moyen d'une machine de travail par fluide (4) d'un dispositif de pressurisation (2) selon l'une quelconque des revendications 1 à 8 précédentes,
présentant l'étape de procédé consistant à :
- solliciter et/ou entraîner la machine de travail par fluide avec un couple appliqué à un arbre de sortie (112, 212) d'une turbine principale (110, 210) de la centrale au moyen d'un couplage de cet arbre de sortie avec un arbre d'entraînement (6) de la machine de travail par fluide.

13. Procédé selon la revendication 12, présentant l'étape de procédé consistant à :
- relier l'arbre de sortie de la turbine principale et l'arbre d'entraînement de la machine de travail par fluide au moyen d'un élément de transfert de puissance (8) .

14. Procédé selon la revendication 12 ou 13, dans lequel
- la liaison entre l'arbre de sortie et la machine de travail par fluide est supprimée pour le démarrage de la centrale et/ou est établie lorsqu'un critère de fermeture prédéterminé est atteint.

15. Procédé selon l'une quelconque des revendications 12 à 14, dans lequel une vitesse de rotation de la machine de travail par fluide et/ou d'un arbre d'entraînement de la machine de travail par fluide est adaptée à une demande de travail par fluide du dispositif de pressurisation.
